(19) Europäisches Patentamt
European Patent Office
Office européen des brevets

(11) **EP 1 788 651 B1**

(12) **EUROPEAN PATENT SPECIFICATION**

(45) Date of publication and mention of the grant of the patent:
**03.04.2019 Bulletin 2019/14**

(21) Application number: **05753364.8**

(22) Date of filing: **21.06.2005**

(51) Int Cl.:
$H01M\ 4/86^{(2006.01)}$          $H01M\ 8/0234^{(2016.01)}$
$H01M\ 8/0239^{(2016.01)}$        $H01M\ 8/0243^{(2016.01)}$
$H01M\ 8/1018^{(2016.01)}$        $H01M\ 8/1007^{(2016.01)}$

(86) International application number:
**PCT/JP2005/011380**

(87) International publication number:
**WO 2005/124907 (29.12.2005 Gazette 2005/52)**

(54) **POROUS ELECTRODE BASE MATERIAL AND PROCESS FOR PRODUCING THE SAME**

PORÖSES ELEKTRODENBASISMATERIAL UND HERSTELLUNGSVERFAHREN DAFÜR

MATÉRIAU POREUX DE BASE D''ÉLECTRODE ET PROCÉDÉ POUR LA FABRICATION DE CELUI-CI

(84) Designated Contracting States:
**GB**

(30) Priority: **21.06.2004 JP 2004182408**
**21.06.2004 JP 2004182409**

(43) Date of publication of application:
**23.05.2007 Bulletin 2007/21**

(73) Proprietor: **Mitsubishi Chemical Corporation**
**Tokyo 100-8251 (JP)**

(72) Inventors:
 • **NAKAMURA, Makoto**
  **Toyohashi-shi,**
  **Aichi-ken (JP)**
 • **OHASHI, Hidehiko**
  **Toyohashi-shi,**
  **Aichi-ken (JP)**

 • **HAMADA, Mitsuo**
  **Toyohashi-shi,**
  **Aichi-ken (JP)**
 • **MIHARA, Kazushige**
  **Toyohashi-shi,**
  **Aichi-ken (JP)**
 • **SUMIOKA, Kazuhiro**
  **Otake-shi,**
  **Hiroshima-ken (JP)**

(74) Representative: **Hoffmann Eitle**
**Patent- und Rechtsanwälte PartmbB**
**Arabellastraße 30**
**81925 München (DE)**

(56) References cited:
**WO-A1-01/56103          WO-A1-01/80342**
**WO-A1-97/32646          DE-A1- 3 632 651**
**FR-A1- 2 237 003         JP-A- 9 157 052**
**JP-A- 2004 027 435**

**Description**

TECHNICAL FIELD

The present invention relates to a porous electrode base material and a production method thereof.

BACKGROUND ART

A porous electrode base material is a member placed between a separator and a catalyst layer in a polymer electrolyte fuel cell. The material is required to have not only the function as an electricity conducting body between the separator and catalyst layer but also the functions to distribute gases such as hydrogen or oxygen supplied from the separator to the catalyst layer and also the function to absorb the water generated in the catalyst layer and discharging it to the outside. Currently, it is generally regarded that a carbonaceous material is effective.

Although methods such as one to bind short carbon fibers and carbonized resin closely have been conventionally adopted in order to strengthen the mechanical strength, it was often the case that gas permeability was reduced and the performance when integrated to fuel cells declined. On the other hand, mechanical strength was weakened when an attempt was made to maintain high gas permeability resulting in products where handling methods are limited.

In patent document 1, a porous electrode base material in which pores are formed using organic fibers because organic fibers are lost by carbonization of the electrode base material is disclosed. However, pores formed in such a way have a small average diameter despite their high porosity and the gas permeability thereof is too low for use in the polymer electrolyte fuel cell. Moreover, there were problems of its thick thickness, large size, and high production cost.

In patent document 2, a production method of a cheap porous electrode base material is disclosed. Although porous electrode base materials obtained by this method have satisfactory values of electrical conductivity and gas permeability in the thickness direction since webs thereof are also oriented in the thickness direction, there were problems in handling aspects such as low mechanical strength, fibers oriented in the thickness direction breaking through electrolyte membranes, and the base materials becoming fragile once pressed.

In patent document 3, in order to prevent cracks forming in porous carbon base materials and to enhance mechanical strength, a porous electrode base material in which the pore diameter is 10 $\mu$m or less and pore volume is 0.05 to 0.16 cc/g is disclosed. However, with such materials having a small number of pores of 10 $\mu$m or less, it is considered that water management will be difficult due to their low water retention characteristics and the electricity generation of fuel cells will not be carried out sufficiently.

[Patent document 1]
Japanese Unexamined Patent Application, First Publication No. H 9-278558
[Patent document 2]
PCT International Publication No. WO 2001/04980 (Japanese Examined Patent Application, Second Publication No. 2003-504822)
[Patent document 3] PCT International Publication WO2004/085728 , and document JP2004027435 all relate to carbon fiber sheets and their manufacturing method.

US 4,818,640 relates to a carbonaceous composite product produced by joining carbonaceous materials together by melt-adhesion of a tetrafluoroethylene resin or a tetrafluoroethylene resin mixed with a highly electroconductive carbon black interposed between the carbonaceous materials, a composite electrode substrate for a fuel cell comprising the carbonaceous composite product and the process for producing the same.

US 3,998,689 relates to a carbon fiber paper is obtained from a mixture of carbon fibers, pulp, organic fibers having a carbon yield of not less than 20% and a paper sheet binder in relative amounts such that the ratio of the carbon fibers to the pulp falls in the range of 40 - 90% by weight of carbon fibers to 60 - 10% by weight of pulp, the ratio of the organic fibers to the combined weight of said carbon fibers and pulp falls in the range of from 5 to 20% by weight and the ratio of the paper sheet binder to the combined weight of said carbon fibers, pulp and organic fibers falls in the range of from 5 to 50% by weight. The resultant mixture is shaped into the form of sheet to produce a mixed paper sheet, impregnated with an organic high molecular substance and baked to carbonize at a temperature of not less than 800 °C in an atmosphere of an inert gas.

EP 1 195 828 A1 provides carbon fiber paper consisting of an organic high-molecular compound as a binder and carbon fibers, characterized in that the carbon fibers contain thin fibers with an average diameter smaller than 5 $\mu$m and an average fiber length of 3 to 10 mm; a porous carbon electrode substrate for a fuel cell having a thickness of 0.05 to 0.5 mm and a bulk density of 0.3 to 0.8 g/cm$^3$, also having a bending strength of 10 MPa or higher and a deflection of 1.5 mm or more at the time of bending, measured by a three-point bending test in conditions of using a sample width of 1 cm, a strain rate of 10 mm/min, and a distance between supporting points of 2 cm; ; and a method of producing a porous carbon electrode substrate for a fuel cell by impregnating the carbon fiber paper with a thermosetting resin, curing the thermosetting resin by heating and pressing treatment, and then carbonizing the paper.

DISCLOSURE OF INVENTION

Problems to be Solved by the Invention

The first object of the present invention is to provide an electrode base material for a polymer electrolyte fuel cell which overcomes the above problems, which is cheap and compact, and which is also optimal for building fuel cell stacks, and a production method of this electrode base material.
The second object of the present invention is to provide an electrode base material for a polymer electrolyte fuel cell which overcomes the above problems, which is cheap, which carries out supply and discharge of water or gases used in reactions smoothly, and which is capable of exerting cell performance, and a production method of this electrode base material.

Means for Solving the Problem

The first aspect of the present invention is a porous electrode base material comprising: short carbon fibers which are dispersed in random directions in a substantially two-dimensional plane and have a fiber diameter of 3 to 9 $\mu$m: an amorphous carbonized resin which binds said short carbon fibers; and a filamentary carbonized resin which further cross-links said short carbon fibers, wherein said porous electrode base material has a thickness of 150 $\mu$m or less.
The second aspect of the present invention is a production method of a porous electrode material comprising: impregnating a carbon fiber paper (which has a carbon fiber mass per unit area of 16 to 40 g/m$^2$, and includes short carbon fibers with a fiber diameter of 3 to 9 $\mu$m and vinylon fibers) with a resin to form a resin-impregnated carbon fiber paper; and carbonizing said resin-impregnated carbon fiber paper. The production method preferably comprises impregnating two carbon fiber papers (which has a carbon fiber mass per unit area of 8 to 20 g/m$^2$, and include short carbon fibers with a fiber diameter of 3 to 9 $\mu$m and vinylon fibers) with a resin to form two resin-impregnated carbon fiber papers; laminating said two carbon resin-impregnated carbon fiber papers to form a laminated paper; and carbonizing said laminated paper.) and laminating said two carbon resin-impregnated carbon fiber papers
The third aspect of the present invention is a porous electrode base material comprising: short carbon fibers which are dispersed in random directions in a substantially two-dimensional plane and have a fiber diameter of 3 to 9 $\mu$m; an amorphous carbonized resin which binds said short carbon fibers; and a network carbonized resin having a minimum fiber diameter of 3 $\mu$m or less which further cross-links said short carbon fibers.
The fourth aspect of the present invention is a production method of a porous electrode material comprising: impregnating a carbon fiber paper which is formed from short carbon fibers (which are dispersed in random directions in a substantially two-dimensional plane and have a fiber diameter of 3 to 9 $\mu$m) and a fibrillated material other than cellulose fiber which has a freeness of 400 to 900 ml to form a resin-impregnated carbon fiber paper; and carbonizing said resin-impregnated carbon fiber paper.

[Effects of the Invention]

According to the first aspect of the present invention, it is possible to obtain a porous electrode base material having a gas permeability of satisfactory values and excellent flexural strength while being thin and cheap. Moreover, according to the production method of a porous electrode base material of the second aspect of the present invention, the aforementioned porous electrode base material can be produced at low cost.
According to the third aspect of the present invention, it is possible to obtain a porous electrode base material for a polymer electrolyte fuel cell which is cheap, which carries out supply and discharge of water or gases used in reactions smoothly, and which is capable of exerting cell performance by overcoming the above problems. Moreover, according to the production method of a porous electrode base material of the fourth aspect of the present invention, the aforementioned porous electrode base material can be produced at low cost.

BRIEF DESCRIPTION OF THE DRAWINGS

Fig. 1 is an electron micrograph of a surface of a porous electrode base material of the first aspect of the present invention.

Fig. 2 is an electron micrograph of a surface of a porous electrode base material of the first aspect of the present invention. Magnification is higher than Fig. 1.

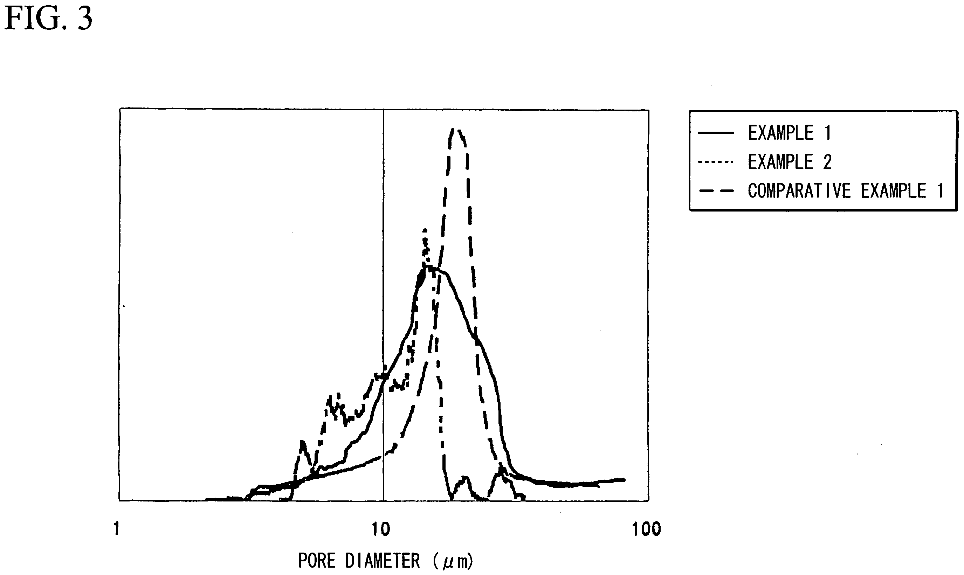

Fig. 3 is a graph showing a pore diameter distribution of the porous electrode base material of the first aspect of the present invention.

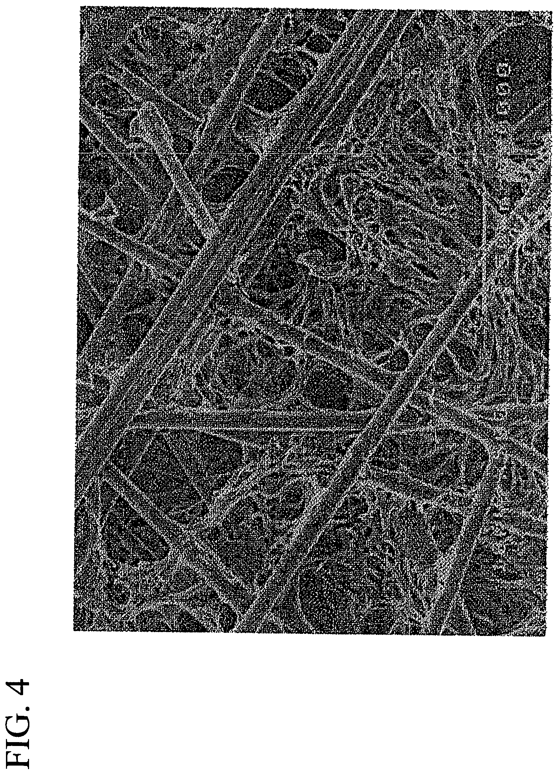

Fig. 4 is an electron micrograph of a surface of a porous electrode base material of the third aspect of the present invention (Example 8).

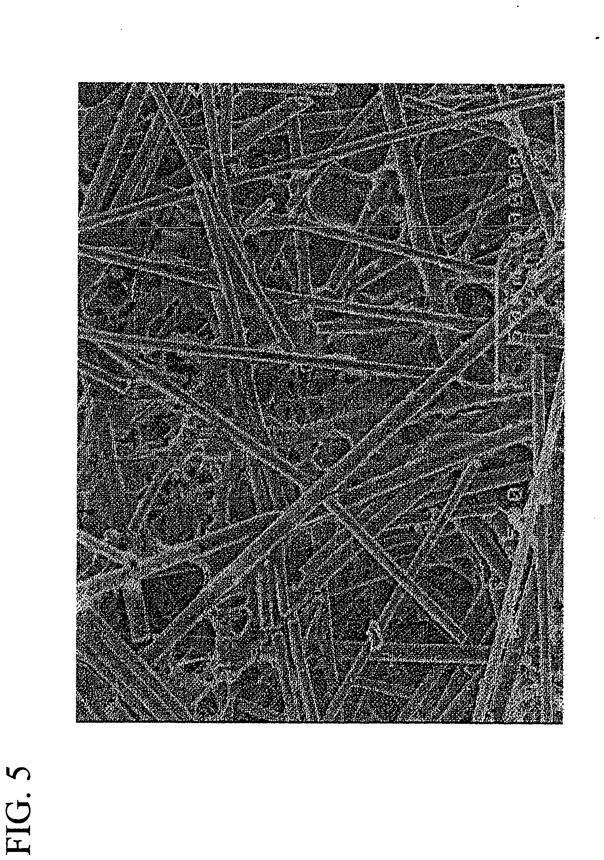

Fig. 5 is an electron micrograph of a surface of a porous electrode base material of the third aspect of the present invention (Example 9).

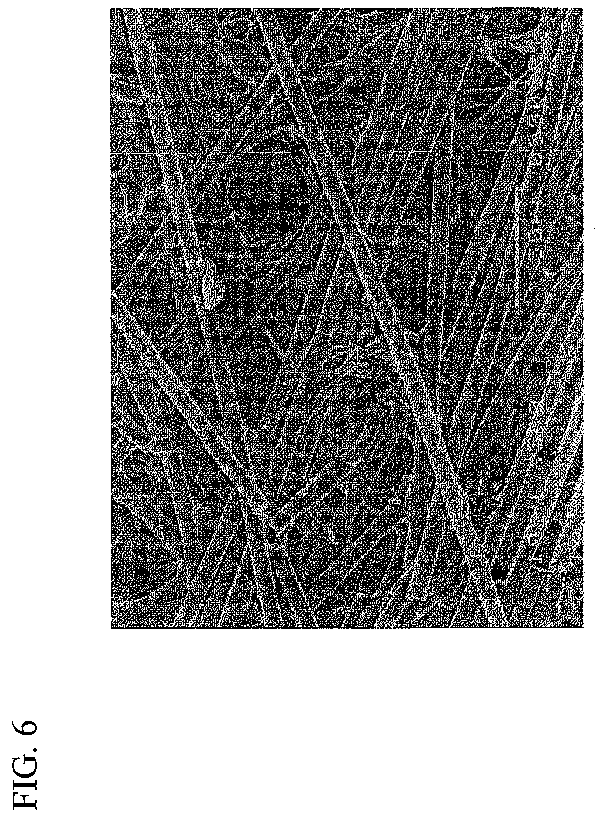

Fig. 6 is an electron micrograph of a surface of a porous electrode base material of Comparative Example 5.

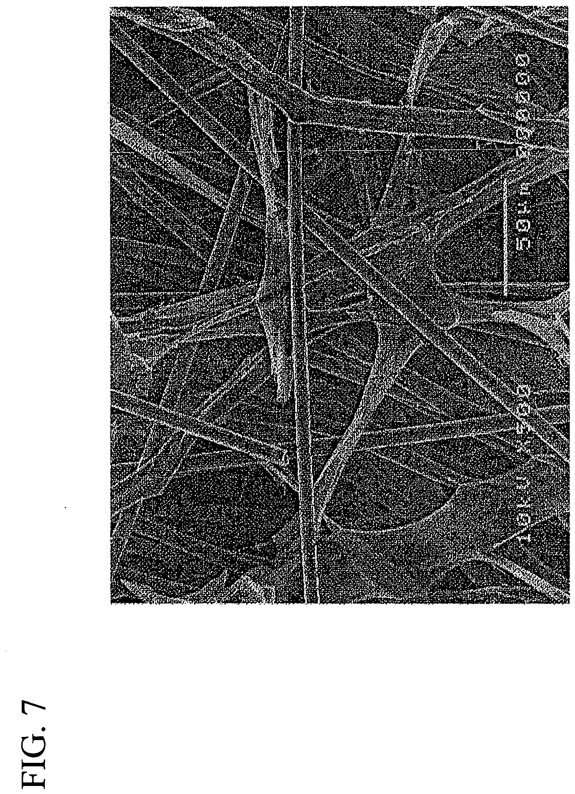

Fig. 7 is an electron micrograph of a surface of a porous electrode base material of the third aspect of the present invention (Example 8).

Fig. 8 is a graph showing a pore diameter distribution of the porous electrode base material of the third aspect of the present invention (Example 8). A comparison was made with a measurement result of Comparative Example 4.

Fig. 9 is a measurement result of cell characteristics of the porous electrode base material of the third aspect of the present invention (Example 8). A comparison was made with the measurement result of Comparative Example 4.

BEST MODE FOR CARRYING OUT THE INVENTION

[First and second aspects]

Embodiments of the first and second aspects will firstly be described below by referring to figures.

<Short carbon fiber>

Carbon fibers which are raw materials of short carbon fibers used in the present invention may be any carbon fibers out of polyacrylonitrile-based carbon fibers, pitch-based carbon fibers, rayon-based carbon fibers, or the like, and polyacrylonitrile-based carbon fibers are preferable. It is particularly preferable that carbon fibers used be formed only from polyacrylonitrile (PAN)-based carbon fibers since the mechanical strength of the porous electrode base material can be made relatively high.

The diameter of short carbon fibers is required to be 3 to 9 $\mu$m in view of production costs and dispersibility of short carbon fibers, and smoothness of the final products of the porous electrode base material. The diameter is preferably between 4 $\mu$m and 8 $\mu$m inclusive.

The fiber length of short carbon fibers is preferably 2 to 12 mm from the viewpoints of binding property with the binder, which will be described later, and dispersibility.

<Dispersion>

In the present invention, the phrase "dispersing in random directions in a substantially two-dimensional plane" means that short carbon fibers are largely lying so as to form roughly one surface. Short circuits due to short carbon fibers or breakage of short carbon fibers can thereby be prevented.

<carbonized resins>

In the present invention, carbonized resins are substances which are made by carbonizing resins and which bind each short carbon fiber. The resins which have a high binding capacity with carbon fibers such as phenol resins and which have a high residual weight at the time of carbonization are preferable; however, they are not particularly limited.

The proportion of these carbonized resins which ultimately remain as carbides in porous electrode base materials differs depending on types of resins or the amount of resin impregnated in carbon fiber paper.

When a porous electrode base material is 100 mass%, it is preferable that carbonized resins therein be 25 to 40 mass% and more preferable lower and upper limits thereof are 28 mass% and 34 mass%, respectively.

25 mass% or more of carbonized resins is required for short carbon fibers to completely bind to each other and for porous electrode base materials to sufficiently maintain mechanical strength thereof. Short carbon fibers which are not completely bound fall off from porous electrode base materials and adhere in electrolyte membranes to become a cause of short circuits in some cases. On the other hand, it is advantageous to make carbonized resins 40 mass% or less so that the ratio of short carbon fibers in porous electrode base materials is maintained high and pores are not filled by resins due to the pressure applied at the time of hardening resins.

<Carbonized resins of indeterminate forms>

In the present invention, similar to the conventional porous electrode base material, it is required that, firstly, short carbon fibers be bound to each other by carbonized resin of amorphous forms.

<Filamentary carbonized resins>

In the present invention, together with amorphous carbonized resins, the presence of filamentary carbonized resins which cross-link one short carbon fiber with another is required from the viewpoint of achieving both mechanical strength and control of reacting gases/moistures.

These filamentary carbonized resins have a different appearance from that of short carbon fibers, and furthermore, the orientation of the carbon constituting filamentary carbonized resins is similar to that of the abovementioned amorphous carbonized resins while carbon alignment in short carbon fibers is highly oriented.

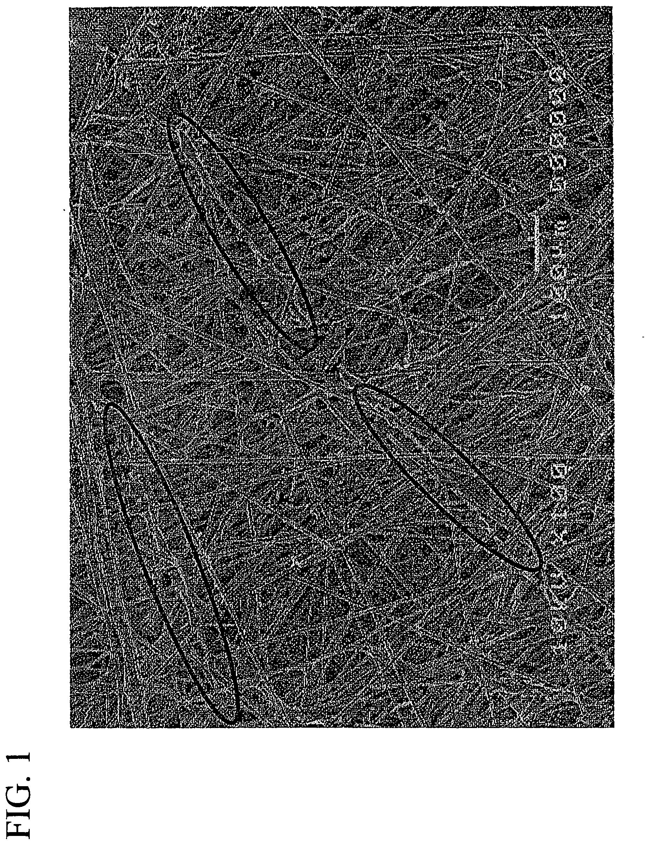

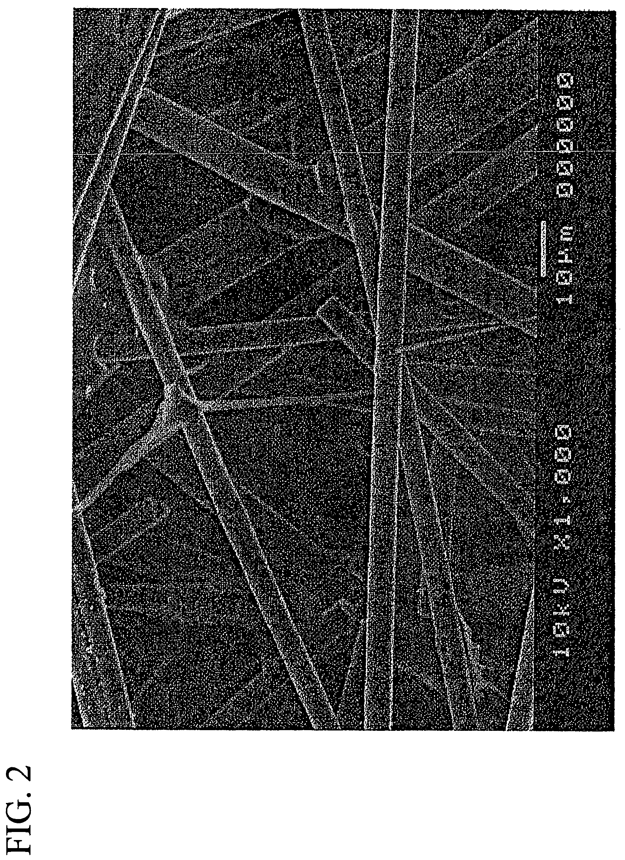

The way one short carbon fiber is cross-linked with another by filamentary carbonized resins is shown in Figs 1 and 2. Due to the filamentary carbonized resins, porous electrode base materials having a strong mechanical strength even with thin thickness are achieved. The reason for the strong mechanical strength is that filamentary carbonized resins seem, as if, to exert reinforcing effect similar to that of short carbon fibers. The ratio of short carbon fibers contained in porous electrode base materials can thereby be reduced and it is possible to provide porous electrode base materials at low cost.

At the same time, since some of the large pores are divided due to the cross-link by filamentary carnonized resins, the porous electrode base material of the present invention has pores with a radius of 5 $\mu$m or less together with pores with a radius of 25 $\mu$m or more; i.e. has a wide pore diameter distribution. The porous electrode base material of the present invention thereby has both a function to smoothly discharge reactant gases or generated water from porous electrode base materials and water retention characteristics to prevent drying of electrolyte membranes to reduce reaction efficiency. This is because the former function is performed by large pores with a radius of 25 $\mu$m or more and the latter function is performed by relatively small pores with a radius of 5 $\mu$m or less. When the distribution range of pore diameters is wide, it is advantageous to achieving both functions required for porous electrode base materials concomitantly.

<Thickness>

The porous electrode base materials of the present invention are required to have a thickness of 150 $\mu$m or less, preferably 140$\mu$m or less, and more preferably 130 $\mu$m or less. Although porous electrode base materials having a thickness thicker than 150 $\mu$m have also been used, they are not preferable considering the cost reduction and downsizing of fuel cell stacks in the future. The electric resistance in the penetration direction can also be reduced as the thickness decreases.

Among porous electrode base materials, with those having a smaller thickness, the flow rate of reactant gases is more likely to be maintained and the performance of overall cell is also more stabilized.

<Bending breaking load>

The characteristic of the present invention is that although it is such a thin porous electrode base material, it has a sufficient bending breaking load as shown below. The porous electrode base material of the present invention has a bending breaking load of 0.06N or more in at least one direction even when the thickness thereof is 150 $\mu$m or less. A more preferable porous electrode base material develops mechanical strength, which is 0.06N or more of bending breaking load, in at least one direction even when the thickness thereof is 130 $\mu$m or less. An even more preferable porous electrode base material has a bending breaking load of 0.11N or more in at least one direction.

The bending breaking load in the present invention is a value determined by a method complying with the standard JIS K-6911 and represents the strength against bending failure. Although values of bending breaking load vary depending on the strain rate, the distance between supporting points, and width of a test piece, in the present invention, the breaking load measured under the conditions of the strain rate of 10 mm/min, the distance between supporting points of 2 cm, and the test piece width of 1 cm is adopted.

It is preferable that the abovementioned bending breaking load in one direction be 0.06N or more in order to avoid problems such as cracks and tears during the handling of products in the continuous production process of porous electrode base materials or the production process of membrane electrode assembly (MEA) using these porous electrode base materials.

It was often the case with the conventional porous electrode base materials that when the thickness thereof was made thin, generated gases were impossible to be discharged or the resulting materials became fragile, and thus handling in the abovementioned processes was problematic.

Although a method to elongate the fiber length of short carbon fibers also exists as a method to improve the mechanical strength of porous electrode base materials while maintaining satisfactory gas permeability thereof, it is possible that uniform dispersibility will be a problem.

<Mass per unit area>

In the porous electrode base material of the present invention, it is required that the mass per unit area of carbon fibers be 16 to 40 g/m$^2$. In this case, it is preferable to achieve the abovementioned mass per unit area by superimposing 2 pieces of carbon fiber papers, which have a half of the abovementioned mass per unit area. Short carbon fibers are a conductive material, and, at the same time, also play a role as a reinforcing material of porous electrode base materials.

It is possible to achieve sufficient strength of porous electrode base materials by making the mass per unit area of carbon fibers 16 g/m$^2$ or more. Additionally, by making the mass per unit area of carbon fibers 40 g/m$^2$ or less, excessively compact structures will not be achieved even when the thickness of the base materials is 150 $\mu$m or less.

Moreover, the porous electrode base material of the present invention is capable of being reeled up continuously and is preferable from the viewpoints of productivity and cost of porous electrode base materials or fuel cells. In particular, since it is possible to make the thickness of the porous electrode base material of the present invention thin and thus handling thereof is easy, one which is rolled continuously is preferable.

<Pore radius distribution>

In the porous electrode base material of the present invention, the volume per unit weight of pores, which have a radius of 5 $\mu$m or less, is preferably 0.20 to 1.00 cc/g when the pore distribution is measured by the mercury penetration method. In addition, it is preferable that the pore volume of pores, which have a radius of 10 $\mu$m or less, be preferably 15% or more of the total pore volume and more preferably 20% or more.

Not only is the function provided to efficiently send and deliver the reactant gases to the reaction section (catalyst bed) but also the function to efficiently discharge moisture contained in the reactant gases or moisture generated by power generation in the porous electrode base materials for fuel cells. Especially, in order to efficiently discharge water in the electrode base materials with a thin film thickness, for the pores to incorporate moisture temporarily when moisture is generated in a large amount, it is preferable that either the volume per unit weight of pores, which have a radius of 5 $\mu$m or less, be 0.20 cc/g or more or the pore volume of pores, which have a radius of 10 $\mu$m or less, be 20% or more of the total pore volume. Since small pores are formed when short carbon fibers are cross-linked to be reinforced by the filamentary carbonized resins, it becomes possible to achieve the volume per unit weight of pores, which have a radius of 5 $\mu$m or less, of 0.20 cc/g or more or the pore volume of pores, which have a radius of 10 $\mu$m or less, of 15% or more of the total pore volume. Additionally, when the volume per unit weight of pores, which have a radius of 5 $\mu$m or less, be larger than 1.00 cc/g, it is not preferable since it becomes more difficult to discharge moisture to the outside. Pore radius and pore volume are calculated from the pressure inside the measuring cell and the volume of mercury injected at the time.

<Form of rolling>

From the viewpoint of downsizing facilities used for production and packing of products, the porous electrode base material of the present invention can preferably be rolled around a paper tube, which has a diameter of 3 inches or less. It is also preferable if the size of the paper tube be small from the viewpoint of easy portability.

<Production method>

The production method of the porous electrode base material of the present invention is according to the method below, for example. That is, a production method of porous electrode base materials by impregnating the carbon fiber paper, which is formed from short carbon fibers with a fiber diameter of 3 to 9 $\mu$m and vinylon fibers and which has a mass per unit area of carbon fiber of 16 to 40 g/m$^2$, with a resin and thereafter carbonizing the resulting paper, or a production method of porous electrode base materials by impregnating the carbon fiber paper, which is formed from short carbon fibers with a fiber diameter of 3 to 9 $\mu$m and vinylon fibers and which has a mass per unit area of carbon fiber of 8 to 20 g/m$^2$, with a resin and after adhering the two papers, carbonizing the resulting papers.

<Vinylon fibers>

It is required to use vinylon fibers in the production method of the present invention. Vinylon fibers are fibers which are improved in heat resistance or water resistance by subjecting polyvinyl alcohol fibers to heat treatment or acetalization with formaldehyde. Although vinylon fibers are lost by decomposition due to carbonization, forms of resins attached to the surrounding thereof remain as they are and these resins form filamentary carbides.

Although fineness of vinylon fibers is not particularly limited, ones of 0.05 to 1.5 dtex are preferable. By making the fineness 0.05 dtex or more, the attachment of resin per one vinylon fiber will be sufficient and the detachment of filamentary carbonized resins from porous electrode base materials after carbonization can be prevented. By making the fineness 1.5 dtex or less, it is possible to prevent the surface of porous electrode base materials becoming rough and when integrated into fuel cells, possible to make a favorable contact between porous electrode base materials and peripheral members.

Although the length of vinylon fibers is not particularly limited, one comparable to that of short carbon fibers used at the same time is preferable. From viewpoints of binding property with binders or dispersibility, 2 to 12 mm is preferable.

Vinylon fibers also play a role in preventing carbon fibers reconverging by dispersing together with carbon fibers. For this reason, one which also has an excellent compatibility with water is preferable.

The mass ratio of the vinylon fibers in carbon fiber papers is preferably 10 to 60 mass%.

By making the mass ratio of the vinylon fibers in carbon fiber papers 10 mass% or more, the reinforcing effect due to filamentary carbides, which are derived from vinylon fibers, will be sufficient. On the other hand, when the ratio is 60 mass% or less, a good balance between filamentary carbides and other carbides is achieved resulting in the satisfactory forms of porous electrode base materials.

<Organic macromolecular compound>

Organic macromolecular compounds act as a binder (sizing agent) to anchor each component in the carbon fiber paper. Polyvinyl alcohol (PVA), polyvinylacetate, or the like can be used as organic macromolecular compounds. Polyvinyl alcohol in particular is preferable as a binder for its excellent binding capacity in the papermaking process resulting in little loss of short carbon fibers. In the present invention, organic macromolecular compounds can also be used as a fibrous form.

<Papermaking of carbon fiber paper>

Although a wet process where short carbon fibers are dispersed in a liquid medium for papermaking or a dry process where short carbon fibers are dispersed in the air to fall down and deposit can be applied as the papermaking methods of carbon fiber papers, the wet process is preferable between the two. Vinylon fibers of the abovementioned amount are preferably made into paper via the wet process together with the organic macromolecular compounds of an appropriate amount as a binder in order to facilitate short carbon fibers to disperse into a single fiber and to prevent the dispersed single fiber to reconverge.

As a method to mix short carbon fibers and vinylon fibers, and organic macromolecular compounds as well when needed, although a method to diffuse and disperse in water together with short carbon fibers and a method to directly mix exist, the method to diffuse and disperse in water is preferable in order to achieve uniform dispersion. By mixing organic macromolecular compounds as such, it is possible to maintain the strength of carbon fiber paper and to prevent the loss of short carbon fibers from carbon fiber papers during the production thereof or the change in the orientation of short carbon fibers.

Moreover, although there are methods to carry out the paper making continuously or in batch form, the papermaking method carried out in the present invention is preferably continuous papermaking because of the easy control of mass per unit area in particular and from viewpoints of both productivity and mechanical strength.

<Resin>

The resin compositions used as resins in the present invention are materials which remain as conductive materials even after carbonization and those which exhibit tackiness or fluidity at normal temperature are preferable. Single or mixtures of phenol resins, furan resins, epoxy resins, melamine resins, imide resins, urethane resins, aramid resins, pitch, or the like can be used. Preferable phenol resins include the resol-type phenol resin which is obtained by the reaction between phenols and aldehydes under the presence of alkaline catalysts.

For resol-type phenol resins, although it is possible to dissolve and mix a novolac-type phenol resin, which is formed by a reaction between phenols and aldehydes under the presence of acidic catalysts by a known method, which is solid, and which exhibits thermal adhesiveness, in this case, those of a self-crosslinking type which contain a curing agent, for example, hexamethylenediamine are preferable.

As phenols, for example, phenol, resorcin, creosol, xylol, or the like is used. As aldehydes, for example, formalin, paraformaldehyde, furfural, or the like is used. Moreover, these can be used as mixtures. It is also possible to use commercially available products as phenol resins.

<Resin amount>

The amount of resin attached to carbon fiber paper is preferably 70 to 150 mass parts relative to 100 mass parts of short carbon fibers. Since it is necessary to attach resins so that the ratio of carbonized resins in porous electrode base materials is 25 to 40 mass% in order to produce electrode base materials, which carry out supply and discharge of water or gases smoothly and which are excellent in flexural strength, it is required to attach resins of 70 to 150 mass parts.

<Impregnation method of resin>

A method for impregnating carbon fiber paper with resins is acceptable as long as it can impregnate carbon fiber paper with resins and is not particularly limited. However, a method to uniformly coat a resin onto the surface of a carbon fiber paper using a coater, a dip-nip method using a wringer (an apparatus for squeezing), or a method to transfer a resin onto a carbon paper by superimposing the carbon fiber paper and a resin film is preferable in the viewpoint that they can continuously be done, and from viewpoints of productivity and possible production of long products.

<Curing and carbonization of resin>

The carbon fiber paper impregnated with a resin can be carbonized as it is. However, it is preferable to cure the resin before carbonization since it prevents gasification of resin at the time of carbonization and thereby improves the strength of porous electrode base materials. Any techniques can be applied for the curing as long as the technique can uniformly heat the carbon fiber paper impregnated with a resin. Examples thereof include a method to superimpose stiff plates from both upper and lower surfaces of the carbon fiber paper impregnated with a resin and heat or blow with hot air from both upper and lower surfaces, and a method to use a continuous belting system or a continuous hot air oven.

The cured resin is subsequently carbonized. Carbonization is carried out in an inert gas in order to enhance the electrical conductivity of porous electrode base materials. Carbonization is preferably carried out continuously over the entire length of carbon fiber paper. If an electrode base material is long, not only the productivity of electrode base material will be high but also the production of a membrane electrode assembly (MEA), which is a post-process thereof, can be carried out continuously, and thus it is possible to greatly contribute to the cost reduction of fuel cells.

Carbonization is preferably carried out by subjecting carbon fiber paper throughout the entire length thereof to a continuous baking treatment under an inert atmosphere within a temperature range of 1000 to 3000°C. In the carbonization of the present invention, a pretreatment which is a baking treatment in the inert atmosphere at approximately 300 to 800°C may be carried out before the carbonization treatment that is a baking treatment under an inert atmosphere within a temperature range of 1000 to 3000°C.

It is preferable that a process to smooth the surface of carbon fiber paper by heating after attaching a resin onto the carbon fiber paper be included. Although methods to smooth the surface of carbon fiber paper are not particularly limited, a method to heat-press using smooth stiff plates from both upper and lower surfaces and a method performed by using a continuous belt-pressing system are available. The method performed by using a continuous belt-pressing system is preferable between the two because long porous electrode base materials can be produced. If a porous electrode base material is long, not only the productivity of electrode base material will be high but also the production of a membrane electrode assembly (MEA), which is a post-process thereof, can be carried out continuously, and thus it is possible to greatly contribute to the cost reduction of fuel cells. The porous electrode base materials having both favorable strength and gas permeability can be obtained even when the process to smooth surfaces is absent; however, it is not preferable since porous electrode base materials will have large undulations, and thus the contact between porous electrode base materials and peripheral members is insufficient when integrated into fuel cells.

There are methods to apply linear pressure to belts by a roll-press and a method to press by applying contact pressure with a liquid pressure head press, in the present invention, the latter is preferable since smoother porous electrode base materials are obtained. In order to effectively smooth surfaces, a method to firstly press a resin at a temperature where it most softens and thereafter fix the resin by heating or cooling is most preferable. When the ratio of the resin impregnated in carbon fiber paper is high, it is easy to smooth surfaces even when the pressing pressure is low. It is not so preferable to enhance the pressing pressure more than necessary in this case since problems such as excessively compact configuration and severe deformation of the porous electrode base material occur when the porous electrode base material is formed. In some cases, gases generated at the time of baking are not sufficiently discharged and break the configuration of porous electrode base material when pressing pressure is high and the configuration is too compact. When carrying out the curing of resin impregnated in the carbon fiber paper by sandwiching between stiff plates or by use of the continuous belting system, it is preferable to apply a stripping agent to stiff plates or belts in advance so that resins do not attach thereto or to carry out the process while putting a released paper between the carbon fiber paper and stiff plates or belts.

[Third and fourth aspects]

Embodiments of the third and fourth aspects will be described below by referring to figures.

<Short carbon fiber>

Although any of carbon fibers, pitch-based carbon fibers, rayon-based carbon fibers, or the like may be acceptable, polyacrylonitrile-based carbon fibers are preferable. It is particularly preferable that carbon fibers used be formed only from polyacrylonitrile (PAN)-based carbon fibers since the mechanical strength of porous electrode base materials can be made relatively high.

The diameter of short carbon fibers is required to be 3 to 9 $\mu$m from the aspects of production costs of short carbon fibers, dispersibility, and smoothness of the final products of porous electrode base material and preferably between 4 $\mu$m and 8 $\mu$m inclusive.

The fiber length of short carbon fibers is preferably 2 to 12 mm from the viewpoints of binding property with the binder, which will be described later, and dispersibility.

<Dispersion>

In the present invention, the phrase "dispersing in random directions in a substantially two-dimensional plane" means that short carbon fibers are largely lying so as to form roughly one surface. Short circuits due to short carbon fibers or breakage of short carbon fibers can thereby be prevented.

<Carbonized resins>

In the present invention, carbonized resins are substances which are made by carbonizing resins and which bind each short carbon fiber. Although ones which have a high binding capacity with carbon fibers such as phenol resins and which have a high residual weight at the time of carbonization are preferable as resins, they are not particularly limited.

The proportion of these carbonized resins which ultimately remain as carbides in porous carbon electrode base materials differs depending on types of resins or the amount of resin impregnated in carbon fiber paper.

When the porous electrode base material was 100 mass%, it is preferable that carbonized resin therein be 25 to 40 mass% and more preferable lower and upper limits thereof are 28 mass% and 34 mass%, respectively.

25 mass% or more of carbonized resin is required for short carbon fibers to completely bind to each other and for porous electrode base materials to sufficiently maintain mechanical strength thereof. Short carbon fibers which are not completely bound fall off from porous electrode base materials and adhere in electrolyte membranes to become a cause of short circuits in some cases. On the other hand, it is advantageous to make carbonized resin 40 mass% or less so that the ratio of short carbon fibers in porous electrode base materials is maintained high and pores are not filled by resins due to the pressure applied at the time of hardening resins.

<Amorphous carbonized resins>

In the present invention, similar to the conventional porous electrode base material, it is required that, firstly, short carbon fibers are bound to each other by amorphous carbonized resins.

<Network carbonized resins>

In the present invention, together with the amorphous carbonized resins, the presence of network carbonized resins of minimum fiber diameter of 3 pm or less which crosslink one short carbon fiber with another is required from the viewpoint of achieving both mechanical strength and control of reactant gases/moistures.

These network carbonized resins have a different appearance from that of short carbon fibers and furthermore, although carbon alignment in short carbon fibers is highly oriented, the orientation of the carbon constituting network carbonized resins is similar to that of the abovementioned amorphous carbonized resins.

An appearance where a short carbon fiber is crosslinked with another short carbon fiber by a network carbonized resin of minimum fiber diameter of 3 pm or less is shown in Fig. 1. By crosslinking network carbonized resins between short carbon fibers as shown in Fig. 1, both small pores with a diameter of approximately 2 $\mu$m and large pores with a diameter of approximately 50 $\mu$m can coexist. Although thin network carbonized resin have a reinforcing effect which is not so great compared to that of carbon fibers, gas permeability tends to be reduced due to the fragmentation of pores. However, sudden decline in performance due to a failure in gas flow (so-called flooding) does not occur even when small pores absorb generated water under highly humid conditions because of the presence of relatively large pores. Although conventional porous electrode base materials with a high gas permeability have a problem in which catalyst layers or macromolecular membranes formed thereon are readily dried, in the porous electrode base material of the present invention having a crosslink of network carbonized resins, since network carbides are forming numerous small pores, water retention characteristics are favorable and the balance between supply and discharge of reacting gases is also stable, and thus the performance when integrated into fuel cells can be improved.

<Distribution of pore radius>

The porous electrode base materials of the present invention preferably have peaks of pore radius distribution in both ranges of 10 $\mu$m or less and of 50 $\mu$m or more when pore radius distribution is measured by the mercury penetration method. The porous electrode base materials of the present invention thereby have not only a function to efficiently send and deliver the reactant gases to the reaction section (catalyst layer) but also a function to efficiently discharge moisture contained in the reactant gases or moistures generated by power generation. The presence of pores having a radius of 50 $\mu$m or more is effective in order to efficiently send and deliver the reacting gases to the reaction section (catalyst layer) and the presence of pores having a radius of 10 $\mu$m or less is effective as pores to temporarily take up moisture when moisture are generated in a large amount in order to efficiently discharge moisture.

Since the porous electrode base materials of the present invention have large pores formed due to the binding of short carbon fibers by amorphous carbonized resins and small pores formed due to the crosslink of short carbon fibers by network carbonized resins, it is possible to achieve the abovementioned distribution of pore radius.

<Gas permeability>

The gas permeability in the present invention is a value determined by a method complying with the standard JIS P-8117 and represents the ease of gas leaving porous electrode base materials. It can be calculated by interposing a porous electrode base material between cells having pores with a diameter of 3 mm, flowing 200 ml of gas with a pressure of 1.29 kPa from pores, and measuring the time for the gas to permeate.

A preferable gas permeability of the porous electrode base material of the present invention is 2000 m/sec/MPa or less and more preferably 1900 m/sec/MPa or less. In porous electrode base materials of the present invention, gas permeability is relatively low due to the presence of network crabonized resins. It is necessary to lower mass per unit area or to lower volume density considerably in order to enhance gas permeability of porous electrode base material of the present invention. In the present invention, by making the gas permeability of porous electrode base materials 2000 m/sec/MPa or less, it is possible to achieve base materials which are difficult to break even when the mass per unit area is small and in which short carbon fibers are not standing in the thickness direction even when volume density is small.

<Form of rolling>

From the viewpoint of downsizing facilities used for production and packing of products, the porous electrode base material of the present invention can preferably be rolled around a paper tube, which has a diameter of 3 inches or less. It is also preferable if the size of the paper tube be small from the viewpoint of easy portability.

<Production method>

The production method of porous electrode base materials of the present invention is a production method of porous electrode base materials where carbon fiber paper formed from short carbon fibers, which are dispersed in random directions in a substantially two-dimensional plane and which have a fiber diameter of 3 to 9 $\mu$m, and fibrillated materials, which are other than cellulose fibers and which have a freeness of 400 to 900 ml, are impregnated with a resin and the resin is thereafter carbonized. It is preferable that the production of porous electrode base materials be carried out continuously throughout the whole process from a viewpoint that production costs can be reduced.

<Fibrillated material>

In the present invention, fibrillated materials are used in order to achieve structures where:

    1) short carbon fibers are bound to each other by amorphous carbonized resins
    2) crosslinking by network carbonized resins with a minimum fiber diameter of 3 pm or less is achieved due to the abovementioned carbonized resins.

Although fibrillated materials are lost by the carbonization of resins, resins attached in the periphery of fibrillated materials remain as carbonized resins and contribute. to the formation of network structures of carbonized resins.

As fibrillated materials, it is required to use fibrillated materials which are other than cellulose fibers and which have a freeness of 400 to 900 ml. By setting the water-filtering degree to 400 ml or more, surface conditions of porous electrode base materials can be made favorable. Additionally, when carbon fiber paper is produced by papermaking, draining at the time of papermaking will be favorable. On the other hand, by setting the water-filtering degree to 900 ml or less, diameters of fibers forming fibrillated materials will be made appropriately and surfaces of porous electrode base materials will not become rough, and thus it is possible to maintain a favorable contact with other members when integrated into fuel cells.

The fibrillated materials disperse together with short carbon fibers and play a role in preventing reconvergence of short carbon fibers. Moreover, although some resins generate condensation water during resin curing, fibrillated materials are also expected to play roles in absorption and discharge of the water. The fibrillated materials which have affinity with water are preferable. As specific fibrillated materials, synthetic pulps of fibrillated polyethylene fibers, acrylic fibers, aramid fibers, or the like are used. Fibrillated polyethylene fibers are preferable from viewpoints of affinity with carbon fibers, ease of handling, and costs. Since fibrillated materials of cellulose fibers remain as carbon in the porous electrode base material at the time of carbonizing resins, the formation of network carbonized resins is difficult.

When the production of carbon fiber paper is carried out by papermaking, it is essential that fibrillated materials which are insoluble and do not swell in a dispersion medium at the time of papermaking also do not swell. When fibrillated materials soluble in the dispersion medium are used, network carbonized resins cannot be formed since the shape is already changing at a stage where resins are attaching.

From a viewpoint of the efficient formation of crosslinking structures, those in which surface free energy of fibers constituting fibrillated materials is larger than surface free energy of short carbon fibers are preferable. Impregnated resins thereby preferentially attach to fibers and it becomes easier to form network crosslinking structures after carbonization.

The weight ratio of fibrillated materials in carbon fiber papers is preferably 10 to 70 mass%. By setting the weight ratio of fibrillated materials to 10 mass% or more, network carbonized resins can be fully developed and sufficient mechanical strength and gas permeability can be conferred to the porous electrode base material. In addition, the weight ratio of 10 mass% or more is preferable since fibrillated materials also work as a reinforcing member to overcome external forces such as swelling or cockles generated at the time of curing resins under a pressure-applied condition. On the other hand, by setting the weight ratio of fibrillated materials to 70 mass% or less, it is possible to prevent the porous electrode base materials from collapsing due to a shortage in resins attaching to short carbon fibers or thickness control from becoming difficult.

<Organic macromolecular compound>

In the production method of porous electrode base materials of the present invention, it is possible to add organic macromolecular compounds as constituting materials of carbon fiber paper. Organic macromolecular compounds act as a binder to anchor each component in the carbon fiber paper. Polyvinyl alcohol (PVA), polyvinylacetate, or the like can be used as organic macromolecular compounds. Among them, polyvinyl alcohol, polyacrylonitrile, cellulose, polyvinylacetate, or the like are preferably used. Polyvinyl alcohol in particular is preferable as a binder for its excellent binding capacity in the papermaking process resulting in little loss of short carbon fibers. In the present invention, organic macromolecular compounds can also be used as a fibrous form.

<Papermaking of carbon fiber paper>

A Carbon fiber paper can be favorably obtained by papermaking. As papermaking methods, a wet process where short carbon fibers are dispersed in a liquid medium for papermaking or a dry process where short carbon fibers are dispersed in the air to fall down and deposit can be applied. The wet process is preferable between the two. In addition, as described previously, it is necessary to mix an appropriate amount of the fibrillated synthetic fibers, which play roles in preventing opening and reconvergence among short carbon fibers, and it is preferable to mix an appropriate amount of organic macromolecular compounds as a binder to bind short carbon fibers to each other.

As a method to mix the fibrillated materials and organic macromolecular compounds as well when needed with short carbon fibers, although a method to diffuse and disperse in water together with short carbon fibers and a method to directly mix exists, the method to diffuse and disperse in water is preferable in order to achieve uniform dispersion. By mixing organic macromolecular compounds as such, it is possible to maintain the strength of carbon fiber papers and to prevent the loss of short carbon fibers from carbon fiber paper during the production thereof or the change in the orientation of short carbon fibers.

Moreover, although there are methods to carry out the papermaking continuously or in batch, the papermaking method carried out in the present invention is preferably continuous papermaking because of the easy control of mass per unit area in particular and from viewpoints of both productivity and mechanical strength.

<Resin>

The resin compositions used as resins in the present invention are preferably those which exhibit tackiness or fluidity at normal temperature and also materials which remain as conductive materials even after carbonization. Single or mixtures of phenol resins, furan resins, epoxy resins, melamine resins, imide resins, urethane resins, aramid resins, pitch, or the like can be used. A resol-type phenol resin which is obtained by the reaction between phenols and aldehydes under the presence of alkaline catalysts can be used as the abovementioned phenol resins.

In addition, for resol-type phenol resins, although it is possible to dissolve and mix a novolac-type phenol resin, which is formed by a reaction between phenols and aldehydes under the presence of acidic catalysts by a known method, which is solid, and which exhibits thermal adhesiveness, in this case, those of a self-crossiinking type which contain a curing agent, for example, hexamethylenediamine are preferable.

As phenols, for example, phenol, resorcin, cresol, xylol, or the like is used. As aldehydes, for example, formalin, paraformaldehyde, furfural, or the like is used. Moreover, these can be used as mixtures. It is also possible to use commercially available products as phenol resins.

<Resin amount>

The amount of resin attached to carbon fiber paper is 70 to 120 mass parts of resin relative to 100 mass parts of short carbon fibers. Since resins are attached so that the ratio of carbonized resins is 20 to 30 mass% in order to produce electrode base materials, which carry out supply and discharge of water or gases smoothly and which are excellent in flexural strength as described previously, 70 to 120 mass parts of resins are attached.

<Impregnation method of resin>

A method for impregnating carbon fiber papers with resins is acceptable as long as it can impregnate carbon fiber papers with resins and is not particularly limited. However, a method to uniformly coat a resin onto the surface of a carbon fiber paper using a coater, a dip-nip method using a wringer, or a method to transfer a resin onto a carbon paper by superimposing the carbon fiber paper and a resin film is preferable in the viewpoint that the can continuously be done and from viewpoints of productivity and possible production of long products.

<Curing and carbonization of resins>

The carbon fiber paper impregnated with a resin can be carbonized as it is. However, it is preferable to cure the resin before carbonization since it prevents gasification of resin at the time of carbonization and thereby improving the strength of porous electrode base materials. Any techniques can be applied for the curing as long as the technique can uniformly heat the carbon fiber paper impregnated with a resin. Examples thereof include a method to superimpose stiff plates from both upper and lower surfaces of the carbon fiber paper impregnated with a resin and heat or blow with hot air from both upper and lower surfaces, and a method to use a continuous belting system or a continuous hot air oven.

The cured resin is subsequently carbonized. Carbonization is carried out in an inert gas in order to enhance the electrical conductivity of porous electrode base materials. Carbonization is preferably carried out continuously over the entire length of carbon fiber paper. If an electrode base material is long, not only the productivity of the electrode base material will be high but also the production of a membrane electrode assembly (MEA), which is a post-process thereof, can be carried out continuously, and thus it is possible to greatly contribute to the cost reduction of fuel cells.

Carbonization is preferably carried out by subjecting carbon fiber paper throughout the entire length thereof to a continuous baking treatment under an inert atmosphere within a temperature range of 1000 to 3000°C. In the carbonization of the present invention, a pretreatment which is a baking treatment in the inert atmosphere at approximately 300 to 800°C may be carried out before the carbonization treatment that is a baking treatment under an inert atmosphere within a temperature range of 1000 to 3000°C.

It is preferable that a process to smooth the surface of carbon fiber papers by heating after attaching a resin onto the carbon fiber paper be included. Although methods to smooth the surface of carbon fiber paper are not particularly limited, a method to heat-press using smooth stiff plates from both upper and lower surfaces and a method performed by using a continuous belt-pressing system are available. The method performed by using a continuous belt-pressing system is preferable between the two because long porous electrode base materials can be produced. If an electrode base material is long, not only the productivity of porous electrode base material will be high but also the production of a membrane electrode assembly (MEA), which is a post-process thereof, can be carried out continuously, and thus it is possible to greatly contribute to the cost reduction of fuel cells. Although porous electrode base materials having both favorable strength and gas permeability can be obtained even when the process to smooth surfaces is absent, it is not preferable since porous electrode base materials will have large undulations, and thus the contact between porous electrode base materials and peripheral members is insufficient when integrated into fuel cells.

Although there are a method to apply linear pressure to belts by a roll-press and a method to press by applying contact pressure with a liquid pressure head press, the latter is preferable since smoother porous electrode base materials are obtained. In order to effectively smooth surfaces, a method to firstly press a resin at a temperature where it most softens and thereafter fix the resin by heating or cooling is most preferable. When the ratio of resin impregnated in carbon fiber paper is high, it is easy to smooth surfaces even when the pressing pressure is low. It is not so preferable to enhance pressing pressure more than necessary in this case since problems such as an excessively compact configuration and severe deformation of porous electrode base materials occur when the porous electrode base materials are formed. In some cases, gases generated at the time of baking are not sufficiently discharged and break the configuration of porous electrode base materials when pressing pressure is high and the configuration is too compact. When carrying out the curing of resin impregnated in carbon fiber paper by sandwiching between stiff plates or by use of the continuous belting system, it is preferable to apply a stripping agent to stiff plates or belts in advance so that resins do not attach thereto or to carry out the process while putting a released paper between the carbon fiber paper and stiff plates or belts.

EXAMPLES

Hereinafter, the first and second aspects and the third and fourth aspects will be described in further detail using Examples 1 to 5 (Comparative Examples 1 and 2) and Examples 6 to 10 (Comparative Examples 3 to 7), respectively.

Each characteristic value or the like in Examples is measured by the following methods.

1) Bending breaking load

Ten sheets of carbon fiber paper were cut out in a size of $80 \times 10$ mm so that the carbon fiber paper in porous electrode base materials at the time of papermaking in longer direction will become long sides of a specimen. The distance between supporting points was made to 2 cm and a load was applied at a strain rate of 10 mm/min and the load when the specimen ruptured was measured using a device for a bending strength test. The average value of ten sheets of specimens is shown.

2) Gas permeability

Gas permeability was determined by a method complying with the standard JIS P-8117. A specimen of porous electrode base material was interposed between cells having pores with a diameter of 3 mm, 200 ml of gas was flowed from pores with a pressure of 1.29 kPa, and the time for the gas to permeate was measured and gas permeability was calculated from the formula below.

$$\text{Gas permeability (m/sec/MPa)} = \text{amount of gas permeated (m}^3) / \text{area of gas-permeating}$$

$$\text{pores (m}^2) / \text{permeation time (sec)} / \text{permeation pressure (MPa)}$$

3) Average pore radius of electrode base materials/ total pore volume/ volume of pores with a radius of 10 $\mu$m or less/ volume of pores with a radius of 5 $\mu$m or less

A distribution of pore volumes and the pore radius was determined by the mercury penetration method and the radius when pore volume was shown to be 50% was set as the average pore radius of electrode base materials. Note that the mercury porosimeter used was Pore Master-60 manufactured by Quantachrome Corporation.

4) Thickness

The thickness of porous electrode base materials was measured using a thickness measuring device Dial Thickness Gauge 7321 (manufactured by Mitutoyo Corporation). The size of a gauge head was 10 mm in diameter and measuring pressure was 1.5 kPa when the measurement was carried out.

5) Surface resistance

Specimens were cut out in a size of 100 × 20 mm so that the long sides thereof became the longer direction of carbon fiber papers in porous electrode base materials at the time of papermaking. Copper wires were placed onto one surface of an electrode base material with 2-cm intervals and the resistance was measured when a current was applied with a current density of 10 mA/cm$^2$.

6) Resistance in penetrating direction

Specimens are interposed between copper plates and 1 MPa of pressure was applied from both upper and lower sides of copper plates and the resistance value was measured when a current was applied with a current density of 10 mA/cm$^2$ and the electrical resistance of porous electrode base materials in thickness direction (resistance in penetrating direction) was determined by the formula below.

$$\text{Penetrating resistance } (\Omega \cdot cm^2) = \text{measured resistance value } (\Omega) \times \text{area of specimen } (cm^2)$$

7) Weight ratio of carbonized resins

The weight ratio of carbonized resins are calculated by the formula below using mass per unit area of obtained porous electrode base materials and mass per unit area of short carbon fibers used.

$$\text{Weight ratio of carbonized resins (mass\%)} = [\text{mass per unit area of porous electrode base materials } (g/m^2) - \text{mass per unit area of short carbon fibers } (g/m^2)] \times 100 \div \text{mass per unit area of porous electrode base materials } (g/m^2)$$

(Example 1)

As short carbon fibers, short carbon fibers where polyacrylonitrile (PAN)-based carbon fibers of average fiber diameter of 7 $\mu$m and average fiber length of 3 mm and PAN-based carbon fibers of average diameter of 4 $\mu$m and average fiber length of 3 mm are mixed at a ratio of 70: 30 (mass ratio) were prepared.
As vinylon fibers, short vinylon fibers of 1.1 dtex and a cut length of 5 mm (Unitika Vinylon F manufactured by Unitika Ltd.) were prepared.
As an organic macromolecular compound, short fibers of polyvinyl alcohol (PVA) (VBP105-1 with a cut length of 3 mm manufactured by Kuraray Co., Ltd.) were prepared.
Short carbon fibers are uniformly dispersed into single fibers in water in a slurry tank of a wet-type continuous tanmo (short-net) machine and when sufficient dispersion was achieved, PVA short fibers and vinylon short fibers were uniformly dispersed and were sent in a web-form so that the amount thereof were 18 mass parts and 32 mass parts relative to 100 mass parts of short carbon fibers.
The sent web was passed through a tanmo (short-net) plate and after drying with a dryer, a carbon fiber paper with mass per unit area of 20 g/m$^2$ and a length of 100 m was obtained (mass per unit area of each composition is described in Table 1; hereinafter, the same applies). Dispersion state of each fiber was favorable.
The carbon fiber paper was then made to uniformly contact, by one surface thereof after another, with a roller where methanol solution of phenol resin, which contained 40 mass% of a phenol resin (Phenolite J-325 manufactured by Dainippon Ink and Chemicals Incorporated) was attached and thereafter the paper was dried by continuously blowing hot air. The carbon paper of 32 g/m$^2$ attached with resins was obtained. By this process, 90 mass parts of phenol resin relative to 100 mass parts of short carbon fibers was attached.
Then, two sheets of this carbon fiber paper attached with resin were pasted together so that the surface, which contacted the tanmo (short-net) plate, faces toward the outside and thereafter the sheets were heated continuously using a continous-type hot pressing device (double belt pressing device: DBP) equipped with a pair of endless belts to obtain sheets where surface thereof was smoothed (sheet thickness: 110 $\mu$m, width: 30 cm, length: 100 m).
Preheating temperature and preheating time in the preheating zone at the time were 200°C and 5 minutes respectively and the temperature in the heating/pressure-applying zone was 250°C and pressing pressure was a linear pressure of $8.0 \times 10^4$ N/m. Note that the sheets were passed through the device while being interposed between two released papers to prevent the sheets from sticking to belts.

Thereafter, the obtained sheets were heated in a continuous baking furnace of 500°C where nitrogen gas atmosphere was prepared and for 5 minutes to carry out the curing of phenol resin and precarbonization. The obtained sheets remained heated in a nitrogen gas atmosphere and in a continuous baking furnace of 2000°C for 5 minutes, carbonized, and the electrode base materials with a length of 100 m were continuously obtained and were rolled around a cylindrical paper tube, which had an outside diameter of 3 inches.

Although being made into a thin membrane, electrode base material was smooth and easy to handle and which was excellent in flexural strength and gas permeability. Evaluation results are shown in Tables 2 and 3. In addition, SEM photograph and pore distribution are shown in Fig. 1-1 and Fig. 2, respectively. The range of pore distribution became wide since there are parts where carbonized resins are crosslinked and parts where they are not and pore volume of pores with a pore radius of 10 $\mu$m or less covered 30% of the total pore volume.

(Example 2)

A porous electrode base material which had a smooth surface was obtained with the same method as that of Example 1 except that the ratio of short carbon fibers was changed to 50/50 (mass ratio). Evaluation results are shown in Tables 2 and 3.

(Example 3)

A porous electrode base material which had a smooth surface was obtained with the same method as that of Example 1 except that vinylon fibers were changed to short vinylon fibers of 0.6 dtex and a cut length of 5 mm (Unitika Vinylon F manufactured by Unitika Ltd.). Evaluation results are shown in Tables 2 and 3.

(Example 4)

A porous electrode base material which had a smooth surface was obtained with the same method as that of Example 3 except that loadings were changed so that the amount of mass per unit area of vinylon fibers was 10 g/m$^2$. Evaluation results are shown in Tables 2 and 3.

(Example 5)

A porous electrode base material which had a smooth surface was obtained with the same method as that of Example 1 except that as short carbon fibers, PAN-based carbon fibers of average fiber diameter of 4 $\mu$m and average fiber length of 3 mm were used. Evaluation results are shown in Tables 2 and 3.

(Comparative Example 1)

A carbon fiber paper of 15 g/m$^2$ was obtained by the same method as that of Example 1 except that as short carbon fibers, only PAN-based carbon fibers of average fiber diameter of 7 $\mu$m and average fiber length of 3 mm were used and vinylon fibers were not added. This carbon fiber paper was subjected to the same method as that of Example 1 to attach 100 mass parts of phenol resin relative to 100 mass parts of short carbon fibers to obtain a carbon fiber paper of 28 g/m$^2$ attached with resins.

Thereafter, attempts were made to obtain porous electrode base materials with the method same as that of Example 1. However, under the same conditions to those in Example 1, numerous cockles appeared after heating/applying pressure. Accordingly, preheating temperature was raised from 200°C to 230°C and since cockles disappeared, this condition was adopted and baking was performed by the same method as that of Example 1 to obtain a porous electrode base material. The obtained porous electrode base material was fragile and was difficult to handle. Evaluation results are shown in Tables 2 and 3. Additionally, pore distribution of this porous electrode base material is shown in Fig. 2. Since the peak was sharp and the pore volume of pores with a diameter of 10 $\mu$m or less occupied only 19% of the total pore volume, it was expected that management of generated moistures were difficult in this base material and the performance thereof when integrated into cells was also low.

(Comparative Example 2)

An electrode base material was obtained with the same method as that of Comparative Example 1 except that mass per unit are of carbon fiber paper was made 30 g/m$^2$ and mass per unit are of carbon fiber paper attached with resin was made 56 g/m$^2$. Although the obtained porous electrode base material became stronger due to the increased mass per unit area, it was fragile and difficult to handle. Evaluation results are shown in Tables 2 and 3.

[Table 1]

| Experimental examples of first and second aspects | | | | | |
|---|---|---|---|---|---|
| | Short carbon fiber (4 $\mu$m/ 7 $\mu$m) | Mass per unit area of short carbon fiber (g/m$^2$) | Vinylon fiber | Mass per unit area of vinylon fiber (g/m$^2$) | Mass per unit area of paper impregnated with resin (g/m$^2$) | Linear pressure of roll press (N/m) |
| Ex. 1 | 3/7 | 13 | 1.1 dtex vinylon | 4 | 32 | 8 $\times$ 10$^4$ |
| Ex. 2 | 5/5 | 13 | 1.1 dtex vinylon | 4 | 32 | 8 $\times$ 10$^4$ |
| Ex. 3 | 5/5 | 13 | 0.6 dtex vinylon | 4 | 32 | 8 $\times$ 10$^4$ |
| Ex. 4 | 5/5 | 13 | 0.6 dtex vinylon | 10 | 39 | 8 $\times$ 10$^4$ |
| Ex. 5 | 10/0 | 13 | 1.1 dtex vinylon | 4 | 32 | 8 $\times$ 10$^4$ |
| Comp. Ex. 1 | 0/10 | 13 | - | - | 28 | 8 $\times$ 10$^4$ |
| Comp. Ex. 2 | 0/10 | 26 | - | - | 56 | 8 $\times$ 10$^4$ |

[Table 2]

| Experimental examples of first and second aspects | | | | | | |
|---|---|---|---|---|---|---|
| | Thickness (mm) | Bending breaking load (N) | Carbonized resin ratio (%) | Mass per unit area (g/m$^2$) | Gas permeability (m/sec/MPa) | Surface resistance (m$\Omega\cdot$cm) | Resistance in penetrating direction (m$\Omega\cdot$cm$^2$) |
| Ex. 1 | 0.120 | 0.30 | 29 | 36 | 2300 | 11 | 5 |
| Ex. 2 | 0.097 | 0.22 | 31 | 38 | 1700 | 11 | 4 |
| Ex. 3 | 0.095 | 0.25 | 30 | 37 | 1600 | 11 | 4 |
| Ex. 4 | 0.101 | 0.22 | 31 | 38 | 1100 | 13 | 5 |
| Ex. 5 | 0.099 | 0.21 | 28 | 36 | 800 | 11 | 5 |
| Comp. Ex. 1 | 0.100 | 0.05 | 25 | 35 | 2800 | 19 | 13 |
| Comp. Ex. 2 | 0.190 | 0.20 | 25 | 70 | 2100 | 8 | 23 |

[Table 3]

| Experimental examples of first and second aspects | | | |
|---|---|---|---|
| | Average pore radius ($\mu$m) | Total pore volume (cc/g) | Volume of pore with a radius of 10 $\mu$m or less (cc/g) | Volume of pore with a radius of 5 $\mu$m or less (cc/g) |
| Ex. 1 | 15 | 2.76 | 0.83 | 0.28 |

(continued)

| Experimental examples of first and second aspects | | | | |
|---|---|---|---|---|
|  | Average pore radius (μm) | Total pore volume (cc/g) | Volume of pore with a radius of 10 μm or less (cc/g) | Volume of pore with a radius of 5 μm or less (cc/g) |
| Ex. 2 | 12 | 2.09 | 0.78 | 0.23 |
| Ex. 3 | 11 | 2.18 | 0.91 | 0.32 |
| Ex. 4 | 10 | 2.27 | 1.02 | 0.36 |
| Ex. 5 | 10 | 2.35 | 1.07 | 0.36 |
| Comp. Ex. 1 | 20 | 2.43 | 0.46 | 0.22 |
| Comp. Ex. 2 | 21 | 2.34 | 0.41 | 0.19 |

Hereinafter, the third and fourth aspects will be described in further detail using Examples 6 to 10 (Comparative Examples 3 to 7).

(Example 6)

Short carbon fibers where polyacrylonitrile (PAN)-based carbon fibers of average fiber diameter of 7 μm and average fiber length of 3 mm and PAN-based carbon fibers of average diameter of 4 μm and average fiber length of 3 mm were mixed at a ratio of 50: 50 (mass ratio) were prepared.

As an organic macromolecular compound, short fibers of polyvinyl alcohol (PVA) (VBP105-1 with a cut length of 3 mm manufactured by Kuraray Co., Ltd.) were prepared.

Further, as a fibrillated material, a polyethylene pulp (SWP manufactured by Mitsui Chemicals, Inc. with a freeness of 450 ml measured with a Canadian standard type of testing method for freeness of pulps (1) which is JIS P8121) was prepared.

Short carbon fibers were uniformly dispersed to split in water in a slurry tank of a wet-type continuous tanmo (short-net) machine and when sufficient dispersion was achieved, short PVA fibers and polyethylene pulp were uniformly dispersed and were sent in a web-form so that the amount thereof were 13 mass parts and 38 mass parts relative to 100 mass parts of short carbon fibers.

The sent web was passed through a tanmo (short-net) plate and after drying with a dryer, a carbon fiber paper A with basis weight of 28 g/m$^2$ and a length of 100 m was obtained (basis weight of each composition is described in Table 1; hereinafter, the same applies). Dispersion state was favorable.

The carbon fiber paper A was then made to uniformly contact, by one surface thereof after another, with a roller where methanol solution of phenol resin (Phenolite J-325 manufactured by Dainippon Ink and Chemicals Incorporated) of 40 mass% was attached and thereafter the paper was dried by continuously blowing hot air. The carbon fiber paper having a basis weight of 47 g/m$^2$ attached with resin was obtained. In this case, 100 mass parts of phenol resin relative to 100 mass parts of short carbon fibers was attached.

Then, two sheets of this carbon fiber paper attached with resin were pasted together and the sheets were heated continuously using a continuous-type hot pressing device (double belt pressing device: DBP) equipped with a pair of endless belts to obtain sheets where surface thereof was smoothed (sheet thickness: 200 μm, width: 30 cm, length: 100 m). Preheating temperature and preheating time in the preheating zone at the time were 150°C and 5 minutes respectively and the temperature in the heating/pressure-applying zone was 250°C and pressing pressure was a linear pressure of $8.0 \times 10^4$ N/m. Note that the sheets were passed through DBP while being interposed between 2 released papers to prevent the sheets from adhering to belts.

Thereafter, these sheets were heated in nitrogen gas atmosphere in a continuous baking furnace of 500°C for 5 minutes to carry out the curing treatment of phenol resin and precarbonization. The obtained sheets were thereafter heated in nitrogen gas atmosphere and in a continuous baking furnace of 2000°C for 5 minutes, carbonized, and the electrode base materials with a length of 100 m were continuously obtained and were rolled around a cylindrical paper tube, which has an outside diameter of 30 cm. Dispersion of carbon fibers was favorable and the obtained electrode base material was easy to handle. Evaluation results are shown in Tables.

(Examples 7 to 10)

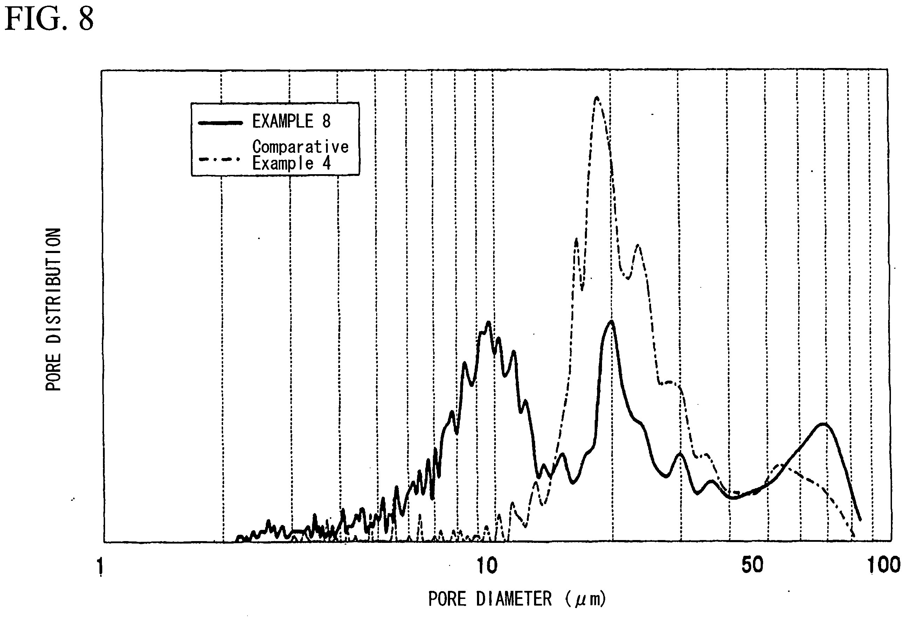

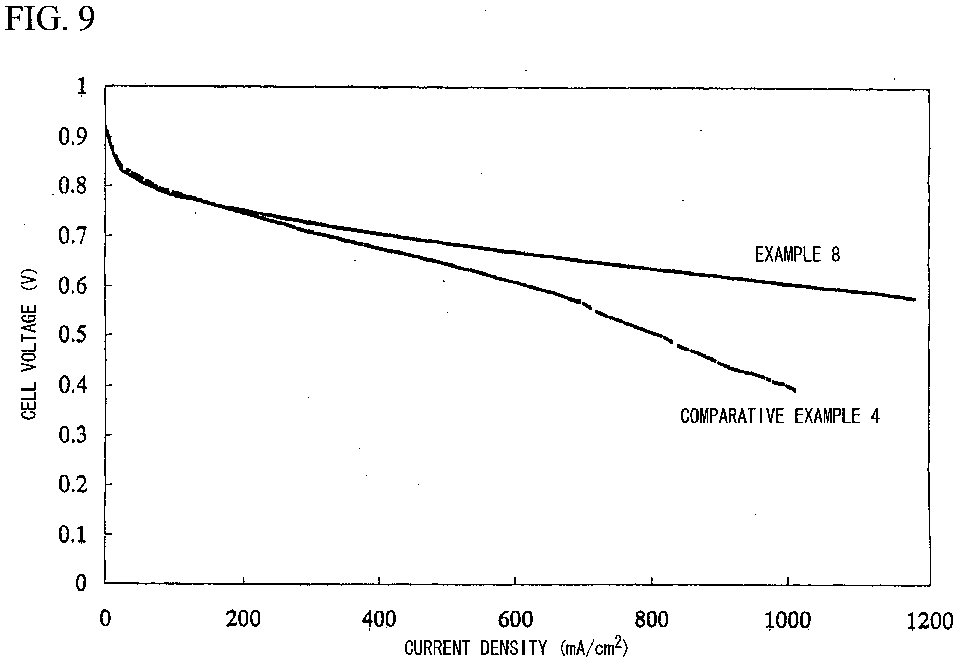

A porous electrode base material which has a smooth surface was obtained with the same method as that of Example 6 except the conditions described in Table 4. Evaluation results are shown in Table 5. The pore distribution of the porous electrode base material obtained in Example 8 is shown in Fig. 8. Two peaks can be seen and the range of pore distribution is wide due to the presence of network carbonized resins. Furthermore, when a single cell of proton exchange membrane fuel cell was made using this porous electrode base material and characteristics of the cell was evaluated, a stabilized performance was achieved under a humid condition of 80°C. The results are shown in Fig. 9.

(Comparative Example 3)

Carbon fiber papers with a basis weight of 26 g/m$^2$ and a length of 100 m were obtained with the same method as that of Example 7 except the amount of polyethylene pulp added was 0. Dispersion state was favorable. Carbon fiber paper attached with resin with a basis weight of 48 g/m$^2$ was subsequently obtained with the same method as that of Example 7. An electrode base material was thereafter obtained by the same method as that of Example 7. Although the electrode base material was excellent in gas permeability, it was fragile and the loss of fibers was apparent.

(Comparative Example 4)

A slurry which was prepared so that the amount of short carbon fibers of polyvinyl alcohol would be 15 mass parts relative to 100 mass parts of short carbon fibers was stirred in a batch paper machine to obtain a carbon fiber paper having mass per unit area of making paper of 30 g/m$^2$. Furthermore, the carbon fiber paper attached with a resin having a basis weight of 69 g/m$^2$ was obtained by attaching 150 mass parts of phenol resin relative to 100 mass parts of short carbon fibers. Two sheets of this carbon fiber paper attached with the resin were adhered together and the sheets were pressed at 180°C for 10 minutes with 0.2 MPa to harden the resin. The obtained sheets were carbonized in inert gas at 2000°C to obtain an electrode base material. The electrode base material had low resistance and high gas permeability. However, its characteristics of the cell were not higher than the sample of Example 3. As was apparent from pore distribution, since this electrode base material had only few small pores, the management of moistures in the electrode base material was not very high.

(Comparative Example 5)

An electrode base material was obtained with the same method as that of Example 1 except that a wood pulp (water-filtering degree of 550 ml) was used as a fibrillated material. Although the obtained electrode base material had a smooth surface as was apparent from Fig. 2, since this electrode base material had only few small pores, the management of moistures in the electrode base material was not very high, and thus the performance when integrated into cells was not very high. Evaluation results are shown in Tables.

(Comparative Example 6)

An electrode base material was obtained with the same method as that of Comparative Example 3 except that a polyacrylonitrile (PAN)-based carbon fibers of average fiber diameter of 4 $\mu$m and average fiber length of 3 mm as short carbon fibers. Although the obtained electrode base material had a smooth surface, since this electrode base material had only few small pores, the management of moistures in the electrode base material was not very high, and thus the performance when integrated into cells was not very high. Evaluation results are shown in Tables.

(Comparative Example 7)

An electrode base material was obtained with the same method as that of Comparative Example 3 except that a hemp pulp (water-filtering degree of 350 ml) was used as a fibrillated material. Although the obtained electrode base material had a smooth surface as was apparent from Fig. 2, since this electrode base material had only few small pores, the management of moistures in the electrode base material was not very high, and thus the performance when integrated into cells was not very high. Evaluation results are shown in Tables.

[Table 4]

| Experimental examples of third and fourth inventions | | | | | | |
|---|---|---|---|---|---|---|
| | Short carbon fiber (4$\mu$m/7$\mu$m) | Mass per unit area of short carbon fiber (g/m$^2$) | Type of fibrillated material | Mass per unit area of fibrillated material (g/m$^2$) | Mass per unit area of paper impregnated with resin (g/m$^2$) | Linear pressure of roll press (N/m) |
| Ex. 6 | 50/50 | 19 | PE pulp | 7 | 47 | 8 $\times$ 10$^4$ |
| Ex. 7 | 0/100 | 22 | PE pulp | 7 | 55 | 8 $\times$ 10$^4$ |
| Ex. 8 | 0/100 | 22 | PE pulp | 17 | 65 | 8 $\times$ 10$^4$ |
| Ex. 9 | 50/50 | 26 | PE pulp | 10 | 66 | 12 $\times$ 10$^4$ |
| Ex. 10 | 0/100 | 26 | PE pulp | 10 | 66 | 12 $\times$ 10$^4$ |
| Comp. Ex. 3 | 0/100 | 22 | - | - | 48 | 8 $\times$ 10$^4$ |
| Comp. Ex. 4 | 0/100 | 26 | - | - | 69 | Batch press 0.2 MPa |
| Comp. Ex. 5 | 0/100 | 22 | Wood pulp | 7 | 55 | 8 $\times$ 10$^4$ |
| Comp. Ex. 6 | 100/0 | 22 | Wood pulp | 7 | 55 | 6 $\times$ 10$^4$ |
| Comp. Ex. 7 | 0/100 | 22 | Hemp pulp | 7 | 55 | 8 $\times$ 10$^4$ |

[Table 5]

| Experimental examples of third and fourth inventions | | | | | | | |
|---|---|---|---|---|---|---|---|
| | Resin carbide ratio (mass %) | Average pore radius ($\mu$m) | Bending breaking load (N) | Mass per unit area (g/m$^2$) | Thickness (mm) | Gas permeability (m/sec/ MPa) | Surface resistance (m$\Omega\cdot$cm) | Resistance in penetrating direction (m$\Omega\cdot$cm$^2$) |
| Ex. 6 | 25 | 10 | 0.3 | 51 | 0.16 | 900 | 17 | 5 |
| Ex. 7 | 31 | 11 | 0.4 | 64 | 0.21 | 900 | 13 | 6 |
| Ex. 8 | 30 | 10 | 0.4 | 63 | 0.21 | 500 | 15 | 7 |
| Ex. 9 | 27 | 8 | 0.5 | 71 | 0.20 | 500 | 11 | 5 |
| Ex. 10 | 27 | 9 | 0.5 | 72 | 0.20 | 600 | 11 | 5 |
| Comp. Ex. 3 | 25 | 24 | 0.2 | 59 | 0.26 | 3400 | 19 | 13 |
| Comp. Ex. 4 | 35 | 19 | 0.7 | 80 | 0.2 | 2000 | 11 | 4 |
| Comp. Ex. 5 | 32 | 13 | 0.5 | 65 | 0.17 | 1300 | 12 | 5 |
| Comp. Ex. 6 | 33 | 9 | 0.7 | 66 | 0.21 | 600 | 15 | 8 |
| Comp. Ex. 7 | 33 | 13 | 0.5 | 66 | 0.18 | 1500 | 12 | 6 |

[Industrial Applicability]

The first and second aspects are an electrode base material for proton exchange membrane fuel cells which overcomes the problems of prior arts, which is cheap, and which is also optimal for building fuel cell stacks and the production method of this electrode base material, respectively.

The third aspect is an electrode base material for proton exchange membrane fuel cells which is cheap, which carries out supply and discharge of water or gases used in reactions smoothly, and which is capable of exerting cell performance and the fourth invention is the production method of this electrode base material at low costs.

**Claims**

1.   A porous electrode base material comprising:
short carbon fibers which are dispersed in random directions in a substantially two-dimensional plane and have a fiber diameter of 3 to 9 $\mu$m and a length of 2 to 12 mm:
an amorphous carbonized resin which binds said short carbon fibers; and a filamentary carbonized resin which further cross-links said short carbon fibers, wherein said porous electrode base material has a thickness of 150 $\mu$m or less.

2.   A method for producing a porous electrode base material comprising the steps of

(a1) impregnating a carbon fiber paper, which has a carbon fiber mass per unit area of 16 to 40 g/m$^2$, and includes short carbon fibers with a fiber diameter of 3 to 9 $\mu$m and a length of 2 to 12 mm and fibers obtained by subjecting polyvinyl alcohol fibers to heat treatment or acetalization with formaldehyde, with a resin to form a resin-impregnated carbon fiber paper; and carbonizing said resin-impregnated carbon fiber paper, or alternatively
(a2) impregnating two carbon fiber papers, which have a carbon fiber mass per unit area of 8 to 20 g/m$^2$, and include short carbon fibers with a fiber diameter of 3 to 9 $\mu$m and fibers obtained by subjecting polyvinyl alcohol fibers to heat treatment or acetalization with formaldehyde, with a resin to form two resin-impregnated carbon fiber papers, and laminating said two carbon resin impregnated carbon fiber papers to form a laminated paper; and
(b) carbonizing said resin-impregnating paper carbon fiber paper from step (a1) or said laminated paper from step (a2),

wherein the mass ratio of said fibers obtained by subjecting polyvinyl alcohol fibers to heat treatment or acetalization with formaldehyde in carbon fiber papers is 10 to 60 mass%, and the amount of said resin attached to carbon fiber paper is 70 to 150 mass parts relative to 100 mass parts of short carbon fibers.

3.   A porous electrode base material comprising:

short carbon fibers which are dispersed in random directions in a substantially two-dimensional plane and have a fiber diameter of 3 to 9 $\mu$m and a length of 2 to 12 mm;
an amorphous carbonized resin which binds said short carbon fibers; and
a network carbonized resin having a fiber diameter of 3 $\mu$m or less which further cross-links said short carbon fibers.

4.   A method for producing a porous electrode base material comprising the steps of:

impregnating a carbon fiber paper which is formed from short carbon fibers, which are dispersed in random directions in a substantially two-dimensional plane and have a fiber diameter of 3 to 9 $\mu$m and a length of 2 to 12 mm, and a fibrillated material other than cellulose fiber which has a freeness of 400 to 900 ml with a resin to form a resin-impregnated carbon fiber paper; and
carbonizing said resin-impregnated carbon fiber paper,
wherein the weight ratio of said fibrillated materials in the carbon fiber paper is 10 to 70 mass%, and the amount of said resin attached to carbon fiber paper is 70 to 150 mass parts relative to 100 mass parts of short carbon fibers.

**Patentansprüche**

1. Poröses Elektroden-Basismaterial, umfassend:

   kurze Carbonfasern, die in willkürlichen Richtungen in einer im Wesentlichen zweidimensionalen Ebene verteilt sind und einen Faserdurchmesser von 3 bis 9 μm und eine Länge von 2 bis 12 mm aufweisen; ein amorphes carbonisiertes Harz, das die kurzen Carbonfasern bindet; und ein filamentäres carbonisiertes Harz, welches die kurzen Carbonfasern weiter vernetzt, worin das poröse Elektroden-Basismaterial eine Dicke von 150 μm oder weniger aufweist.

2. Verfahren zur Herstellung eines porösen Elektroden-Basismaterials, umfassend die Schritte

   (a1) Imprägnieren eines Carbonfaserpapiers, welches eine Carbonfasermasse je Einheitsfläche von 16 bis 40 g/m$^2$ aufweist und kurze Carbonfasern mit einem Faserdurchmesser von 3 bis 9 μm und einer Länge von 2 bis 12 mm und Fasern, die durch Unterziehen von Polyvinylalkoholfasern unter eine Wärmebehandlung oder eine Acetalisierung mit Formaldehyd erhalten sind, umfasst, mit einem Harz, um ein harzimprägniertes Carbonfaserpapier zu bilden; und Carbonisieren des harzimprägniertes Carbonfaserpapiers, oder alternativ
   (a2) Imprägnieren von zwei Carbonfaserpapieren, die eine Carbonfasermasse je Einheitsfläche von 8 bis 20 g/m$^2$ aufweisen und kurze Carbonfasern mit einem Faserdurchmesser von 3 bis 9 μm und Fasern, die durch Unterziehen von Polyvinylalkoholfasern unter eine Wärmebehandlung oder eine Acetalisierung mit Formaldehyd erhalten sind, umfasst, mit einem Harz, um zwei harzimprägnierte Carbonfaserpapiere zu bilden, und Laminieren der zwei Carbon-harzimprägnieren Carbonfaserpapiere, um ein laminiertes Papier zu bilden; und
   (b) Carbonisieren des Harz-imprägnierten Papier-Carbonfaserpapiers aus Schritt (a1) oder des laminierten Papiers aus Schritt (a2),

   worin der Masseanteil der Fasern, die durch Unterziehen von Polyvinylalkoholfasern unter eine Wärmebehandlung oder eine Acetalisierung mit Formaldehyd erhalten sind, in den Carbonfaserpapieren 10 bis 60 Masse-% beträgt und die Menge des Harzes, das mit dem Carbonfaserpapier verbunden ist, 70 bis 150 Masseteile beträgt, relativ zu 100 Masseteilen der kurzen Carbonfasern.

3. Poröses Elektroden-Basismaterial, umfassend:

   kurze Carbonfasern, die in willkürlichen Richtungen in einer im Wesentlichen zweidimensionalen Ebene verteilt sind und einen Faserdurchmesser von 3 bis 9 μm und eine Länge von 2 bis 12 mm aufweisen; ein amorphes carbonisiertes Harz, das die kurzen Carbonfasern bindet; und ein carbonisiertes Netzwerk-Harz mit einem Faserdurchmesser von 3 μm oder weniger, welches die kurzen Carbonfasern weiter vernetzt.

4. Verfahren zur Herstellung eines porösen Elektroden-Basismaterials, umfassend die Schritte:

   Imprägnieren eines Carbonfaserpapiers, welches aus kurzen Carbonfasern, die in willkürlichen Richtungen in einer im Wesentlichen zweidimensionalen Ebene verteilt sind und einen Faserdurchmesser von 3 bis 9 μm und eine Länge von 2 bis 12 mm aufweisen, und einem fibrillierten Material, außer Cellulosefasern, gebildet ist, welches einen Freeness-Wert von 400 bis 900 ml aufweist, mit einem Harz, um ein harzimprägniertes Carbonfaserpapier zu bilden; und
   Carbonisieren des harzimprägnierten Carbonfaserpapiers;
   worin der Gewichtsanteil des fibrillierten Materials in dem Carbonfaserpapier 10 bis 70 Masse-% beträgt und die Menge des Harzes, das mit dem Carbonfaserpapier verbunden ist, 70 bis 150 Masseteile beträgt, relativ zu 100 Masseteile der kurzen Carbonfasern.

**Revendications**

1. Matériau poreux de base d'électrode comprenant :

   des fibres courtes de carbone qui sont dispersées dans des directions aléatoires dans un plan sensiblement bidimensionnel et ont un diamètre de fibre de 3 à 9 μm et une longueur de 2 à 12 mm ;

une résine carbonisée amorphe qui se lie auxdites fibres courtes de carbone ; et
une résine carbonisée filamenteuse qui réticule davantage lesdites fibres courtes de carbone, dans lequel ledit matériau poreux de base d'électrode a une épaisseur de 150 μm ou moins.

2. Procédé de production d'un matériau poreux de base d'électrode comprenant les étapes de

(a1) d'imprégnation d'un papier en fibres de carbone, qui a une masse de fibres de carbone par unité de surface de 16 à 40 g/m$^2$, et inclut des fibres courtes de carbone ayant un diamètre de fibre de 3 à 9 μm et une longueur de 2 à 12 mm et des fibres obtenues par soumission de fibres de poly(alcool vinylique) à un traitement thermique ou à une acétalisation avec du formaldéhyde, avec une résine pour former un papier en fibres de carbone imprégné de résine ; et de carbonisation dudit papier en fibres de carbone imprégné de résine,
ou en variante
(a2) d'imprégnation de deux papiers en fibres de carbone, qui ont une masse de fibres de carbone par unité de surface de 8 à 20 g/m$^2$, et incluent des fibres courtes de carbone ayant un diamètre de fibre de 3 à 9 μm et des fibres obtenues par soumission de fibres de poly(alcool vinylique) à un traitement thermique ou à une acétalisation avec du formaldéhyde, avec une résine pour former deux papiers en fibres de carbone imprégnés de résine, et de stratification desdits deux papiers en fibres de carbone imprégnés de résine carbonée pour former un papier stratifié ;
et
(b) de carbonisation dudit papier en fibres de carbone imprégné de résine de l'étape (a1) ou dudit papier stratifié de l'étape (a2),

dans lequel le rapport massique desdites fibres obtenues par soumission de fibres de poly(alcool vinylique) à un traitement thermique ou à une acétalisation avec du formaldéhyde dans des papiers en fibres de carbone est de 10 à 60 % en masse, et la quantité de ladite résine fixée au papier en fibres de carbone est de 70 à 150 parties en masse par rapport à 100 parties en masse des fibres courtes de carbone.

3. Matériau poreux de base d'électrode comprenant :

des fibres courtes de carbone qui sont dispersées dans des directions aléatoires dans un plan sensiblement bidimensionnel et ont un diamètre de fibre de 3 à 9 μm et une longueur de 2 à 12 mm ;
une résine carbonisée amorphe qui se lie auxdites fibres courtes de carbone ; et
une résine carbonisée à réseau ayant un diamètre de fibre de 3 μm ou moins qui réticule davantage lesdites fibres courtes de carbone.

4. Procédé de production d'un matériau poreux de base d'électrode comprenant les étapes :

d'imprégnation d'un papier en fibres de carbone qui est formé à partir de fibres courtes de carbone, qui sont dispersées dans des directions aléatoires dans un plan sensiblement bidimensionnel et ont un diamètre de fibre de 3 à 9 μm et une longueur de 2 à 12 mm, et d'un matériau fibrillé autre qu'une fibre de cellulose qui a un indice d'égouttage de 400 à 900 ml avec une résine pour former un papier en fibres de carbone imprégné de résine ; et
de carbonisation dudit papier en fibres de carbone imprégné de résine,
dans lequel le rapport pondéral desdits matériaux fibrillés dans le papier en fibres de carbone est de 10 à 70 % en masse, et la quantité de ladite résine fixée au papier en fibres de carbone est de 70 à 150 parties en masse par rapport à 100 parties en masse des fibres courtes de carbone.

FIG. 1

FIG. 2

# FIG. 3

Legend:
— EXAMPLE 1
······ EXAMPLE 2
— — COMPARATIVE EXAMPLE 1

PORE DIAMETER ($\mu$m)

EP 1 788 651 B1

FIG. 4

26

FIG. 5

FIG. 6

FIG. 7

FIG. 8

FIG. 9

EP 1 788 651 B1

**EP 1 788 651 B1**

**REFERENCES CITED IN THE DESCRIPTION**

**Patent documents cited in the description**

- JP H9278558 B
- WO 200104980 A
- JP 2003504822 A
- WO 2004085728 A
- JP 2004027435 B
- US 4818640 A
- US 3998689 A
- EP 1195828 A1